# FASCICULE DE BREVET EUROPEEN

(11) **EP 2 337 929 B1**
(45) Date de publication et mention de la délivrance du brevet: **29.08.2012**
(21) Numéro de dépôt: 09755924.9
(22) Date de dépôt: 16.10.2009
(51) Int. Cl.: F01D 5/08, F02C 7/18

(54) **VENTILATION D'UNE TURBINE HAUTE-PRESSION DANS UNE TURBOMACHINE**
LÜFTUNG EINER HOCHDRUCKTURBINE IN EINER TURBOMASCHINE
VENTILATION OF A HIGH-PRESSURE TURBINE IN A TURBOMACHINE

(30) Priorité: 20.10.2008 FR 0805795
(43) Date de publication de la demande: 29.06.2011
(73) Titulaire: Snecma, 75015 Paris (FR)
(72) Inventeur: DAKOWSKI, Mathieu, 77550 Moissy Cramayel Cedex (FR); GARIN, Fabrice, 77550 Moissy Cramayel Cedex (FR); ROUSSIN-LEROUX, Delphine, 77550 Moissy Cramayel Cedex (FR); SCHWEBLEN, Wilfried, 77550 Moissy Cramayel Cedex (FR)
(74) Mandataire: Ramey, Daniel
(86) Numéro de dépôt international: PCT/FR2009/001214
(87) Numéro de publication internationale: WO 2010/046553

(56) Documents cités:
- EP-A- 1 394 358
- EP-A- 1 911 937
- EP-A- 1 939 397
- DE-A1-102004 042 295
- FR-A- 2 907 496

## Description

La présente invention concerne la ventilation d'une turbine haute-pression dans une turbomachine à double corps, telle qu'un turboréacteur d'avion, et plus particulièrement la ventilation d'un disque de turbine haute-pression.

Les turbomachines à double corps comprennent une turbine haute-pression agencée en sortie d'une chambre de combustion pour extraire de l'énergie d'un flux de gaz éjectés par la chambre de combustion et entraîner en rotation un compresseur haute-pression disposé en amont de la chambre de combustion et alimentant cette chambre en air sous pression. Ces turbomachines comprennent également une turbine basse-pression agencée en aval de la turbine haute-pression pour extraire un surcroît d'énergie du flux de gaz et entraîner en rotation un compresseur basse-pression agencé en amont du compresseur haute-pression.

La turbine haute-pression comprend en général un disque disposé en sortie de la chambre de combustion et portant des aubes entraînées en rotation par le flux de gaz éjéctés par cette chambre de combustion, le disque étant entouré d'un élément de stator, tel qu'un anneau sectorisé, pour assurer l'étanchéité de la veine d'écoulement des gaz dans la turbine. Un tel disque de rotor est décrit dans le document FR 2907496.

Du fait des températures élevées atteintes par les gaz de combustion, l'anneau d'étanchéité du stator et le disque de rotor sont soumis à d'importantes contraintes thermiques de nature à induire des dilatations de ces composants.

Le disque a une masse relativement élevée et réagit donc plus lentement que l'anneau d'étanchéité aux variations de température des gaz provoquées par les variations du régime de fonctionnement de la turbomachine, ce qui génère des dilatations thermiques différentielles, et cela d'autant plus que le disque est moins exposé aux gaz de combustion que les aubes qu'il porte et que l'anneau d'étanchéité du stator.

Ces dilatations thermiques différentielles conduisent à des variations des jeux en sommet d'aube au cours des différentes phases de fonctionnement de la turbomachine, ce qui oblige à prévoir des jeux relativement importants au détriment des performances de la turbine.

De plus, la température n'est pas homogène dans le disque, notamment entre sa périphérie radialement externe portant les aubes qui sont en contact avec les gaz de combustion, et son moyeu qui se trouve à l'écart de ces gaz de combustion.

Les gradients thermiques dans le disque réduisent sa durée de vie et imposent l'utilisation d'un disque relativement épais et massif, en contradiction avec les recherches de gains de masse inhérentes à la conception de ces turbomachines.

Pour limiter ces inconvénients, le disque est en général ventilé par de l'air prélevé en amont, pour le réchauffer lors des montées en régime et accélérer sa dilatation thermique, et pour le refroidir lors des baisses de régime et accélérer sa contraction.

Les aubes du disque bénéficient en général d'un circuit de ventilation dédié, prélevant de l'air en fond de chambre de combustion pour l'amener, au moyen d'injecteurs, dans une cavité annulaire formée immédiatement en amont du disque et communiquant avec des circuits de ventilation aménagés à l'intérieur des aubes.

Le moyeu du disque reçoit de l'air de ventilation prélevé, en général, au niveau d'un étage du compresseur haute-pression, et circulant vers l'aval, par exemple le long d'une enveloppe cylindrique ou fourreau s'étendant axialement depuis l'étage précité du compresseur et délimitant une cavité annulaire radialement interne par rapport à la cavité précitée, jusqu'en aval du disque de la turbine haute-pression.

Toutefois, l'air prélevé sur le compresseur haute-pression pour la ventilation du moyeu du disque n'a pas la même température et suit un parcours considérablement plus long que l'air qui est prélevé en fond de chambre de combustion pour ventiler les aubes de ce disque. Lors d'un changement de régime, l'air de ventilation du moyeu du disque voit ainsi sa température varier avec un retard par rapport à l'air de ventilation des aubes et par rapport aux gaz de combustion.

Cela rend difficile le contrôle des jeux en sommet d'aube et impose de prévoir des jeux relativement importants de nature à pénaliser les performances de la turbine, pour limiter les risques d'usure prématurée des aubes et de l'anneau d'étanchéité qui les entoure.

En outre, cela nuit à une réduction satisfaisante des gradients thermiques dans le disque de la turbine.

De plus, l'air prélevé en fond de chambre de combustion pour la ventilation des aubes de la turbine haute-pression a une pression plus élevée que l'air prélevé sur le compresseur haute-pression pour la ventilation du moyeu du disque de cette turbine.

Or l'air de ventilation des aubes passe par la cavité annulaire reliée aux circuits de ventilation internes des aubes, et est ainsi appliqué sur une partie radialement externe du flanc amont du disque, tandis que l'air de ventilation du moyeu s'écoule dans la cavité radialement interne de part et d'autre du moyeu du disque.

II en résulte un déséquilibre des pressions appliquées sur le disque, induisant une poussée axiale du disque vers l'aval, rendant plus difficile le contrôle de la turbomachine.

L'invention a notamment pour but d'apporter une solution simple, économique et efficace à ces problèmes, permettant d'éviter les inconvénients de la technique connue.

Elle a en particulier pour but de diminuer les gradients thermiques dans le disque de rotor de la turbine haute-pression, et de réduire le temps de réponse en température de ce disque.

Elle a également pour but d'équilibrer les pressions appliquées de part et d'autre du disque pour limiter les efforts axiaux appliqués au disque

L'invention propose à cet effet une turbine haute-pression de turbomachine, comprenant au moins un disque aubagé de rotor comportant des brides annulaires amont et aval séparant une cavité annulaire radialement interne dans laquelle s'étend le moyeu du disque, de deux cavités annulaires radialement externes, dont l'une est en amont du disque et reçoit un flux d'air de ventilation des aubes du disque provenant d'un fond de chambre de combustion, et dont l'autre est en aval du disque, caractérisée en ce que la bride amont du disque comporte des moyens faisant communiquer la cavité radialement externe amont et la cavité radialement interne pour la ventilation du moyeu du disque.

La ventilation du moyeu du disque de la turbine haute-pression n'est ainsi plus assurée par de l'air prélevé au niveau d'un étage du compresseur haute-pression de la turbomachine, mais par une partie de l'air prélevé en fond de chambre de combustion et injecté dans la cavité radialement externe située en amont du disque, l'autre partie de cet air étant utilisée pour la ventilation des aubes portées par le disque.

Par conséquent, l'air de ventilation du moyeu du disque suit un trajet relativement court, à l'instar de l'air de ventilation des aubes, de sorte que sa température suit quasiment sans retard les variations du régime de fonctionnement de la turbomachine.

Cela permet de réduire les dilatations thermiques différentielles entre le rotor de la turbine haute-pression et l'anneau d'étanchéité qui entoure ce rotor, de sorte que les jeux en sommet d'aube peuvent être réduits lors du dimensionnement de la turbine, sans risque d'usure prématurée des aubes et de l'anneau d'étanchéité.

L'invention permet également de réduire les gradients de température dans le disque de la turbine haute-pression, ce qui accroît la durée de vie de ce disque et autorise l'utilisation d'un disque d'épaisseur relativement réduite de manière à réduire la masse de la turbomachine, ce qui est particulièrement avantageux dans le cas d'un turboréacteur d'avion. L'utilisation d'un disque d'épaisseur réduite permet en outre d'améliorer le temps de réponse en température de ce disque et de limiter d'autant plus les dilatations thermiques différentielles évoquées ci-dessus.

Par ailleurs, l'air de ventilation du moyeu du disque a la même pression que l'air de ventilation des aubes de ce disque, de sorte que la même pression est appliquée par l'air de ventilation en amont et en aval du disque, ce qui permet de réduire la poussée axiale de l'air de ventilation sur le disque. Cela présente des avantages, notamment pour le dimensionnement des roulements des paliers de support du rotor de la turbine haute-pression.

Dans un mode de réalisation préféré de l'invention, les moyens faisant communiquer la cavité radialement externe amont et la cavité radialement interne comprennent des rainures radiales formées sur la face amont de la bride amont du disque, ces rainures formant des canaux de circulation d'air entre la bride amont et un composant tournant de la turbomachine auquel cette bride est relié.

Les rainures de la bride amont, parfois appelées lunules, permettent de faire passer de l'air de la cavité radialement externe dans la cavité radialement interne, sans nuire à la tenue mécanique de cette bride.

La bride aval du disque comprend avantageusement des moyens faisant communiquer la cavité radialement interne et la cavité radialement externe aval, ces moyens comprenant de préférence des rainures radiales formées sur la face aval de la bride aval du disque. Ces rainures forment des canaux de circulation d'air entre la bride aval et un composant tournant de la turbomachine auquel cette bride est reliée.

La mise en communication de la cavité radialement externe aval avec la cavité radialement interne permet d'appliquer la pression de l'air de ventilation du moyeu du disque sur l'ensemble du flanc aval de ce disque, de manière à réduire au mieux la poussée axiale sur le disque.

Les rainures de la bride aval procurent le même avantage, en termes de propriétés mécaniques, que les rainures de la bride amont.

Selon une autre caractéristique de l'invention, la cavité radialement interne est délimitée, radialement vers l'intérieur, par une enveloppe cylindrique ou fourreau dont l'extrémité amont est fixée au composant portant la bride amont du disque, et dont l'extrémité aval est fixée au composant portant la bride aval du disque.

Le fourreau permet de fermer à étanchéité la cavité radialement interne, et présente l'avantage d'être considérablement raccourci par rapport aux fourreaux de l'art antérieur, du fait de sa fixation à faible distance en amont et en aval du disque de la turbine haute-pression. Ce raccourcissement du fourreau permet non seulement un gain de masse mais également de réduire les risques de coïncidences vibratoires sur les - modes de flexion de ce fourreau.

Dans le mode de réalisation préféré de l'invention, le fourreau délimite, avec l'arbre d'une turbine basse-pression de la turbomachine, un passage annulaire d'amenée d'air de ventilation prélevé sur un étage d'un compresseur haute-pression de la turbomachine.

Cet air de ventilation peut par exemple être utilisé pour la ventilation d'éléments du rotor de la turbine basse-pression en aval de la turbine haute-pression.

Le composant portant la bride amont du disque est par exemple un disque de rotor portant des joints à labyrinthe et comportant des orifices, ménagés dans le prolongement d'injecteurs fixés à une paroi interne de la chambre de combustion, pour le passage du flux d'air prélevé en fond de chambre de combustion.

Le composant portant la bride aval du disque est par exemple un tourillon du rotor.

L'invention concerne également une turbomachine comprenant une turbine haute-pression du type décrit ci-dessus.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique partielle en coupe axiale d'une turbomachine comprenant une turbine haute-pression selon l'art antérieur ;
- la figure 2 est une vue schématique partielle en coupe axiale à plus grande échelle d'une turbomachine comprenant une turbine haute-pression selon l'invention.

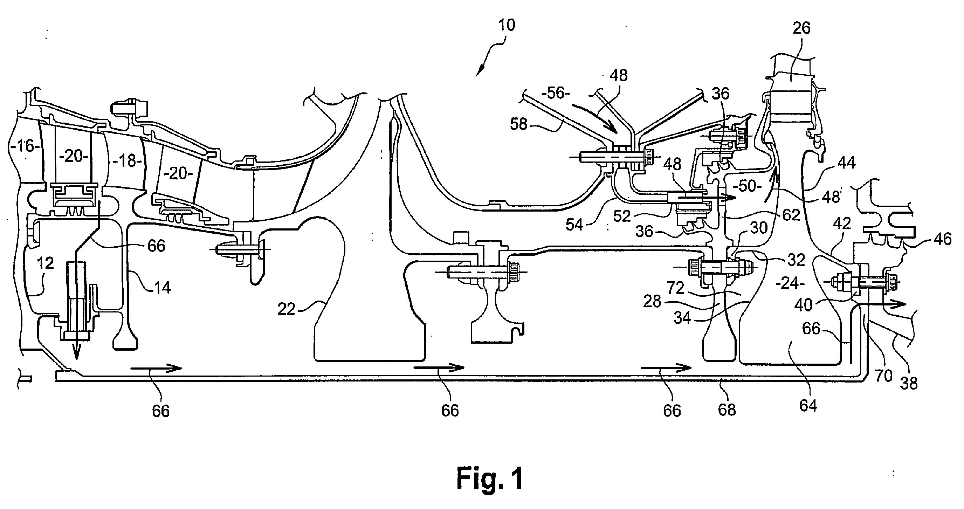

La figure 1 représente un turboréacteur d'avion 10 à double corps d'un type connu, comprenant notamment, de l'amont vers l'aval, un compresseur haute-pression, une chambre de combustion et une turbine haute-pression.

Le compresseur haute-pression comprend un rotor formé de disques 12, 14 portant des aubes 16, 18 et entre lesquels sont intercalés des étages redresseurs 20 destinés au guidage du flux d'air dans le compresseur. A sa sortie, le compresseur haute-pression comprend un rouet centrifuge 22 destiné à alimenter en air sous pression la chambre de combustion.

La turbine haute-pression comprend essentiellement un disque 24 de rotor portant des aubes 26 s'étendant dans la veine d'écoulement des gaz de combustion éjectés par la chambre de combustion et destinées à extraire de l'énergie mécanique de ce flux de gaz pour entraîner en rotation le rotor de la turbine haute-pression et du compresseur haute-pression, d'une manière connue. Les aubes 26 du disque 24 sont entourées par un anneau d'étanchéité sectorisé (non visible sur la figure) fixé à un carter de la turbine haute-pression et assurant l'étanchéité de la veine d'écoulement des gaz de combustion dans cette turbine.

Le disque 24 de la turbine haute-pression est relié à un disque tournant 28, disposé en amont du disque 24, par une bride annulaire 30 s'étendant radialement à l'extrémité amont d'une paroi cylindrique 32 qui s'étend vers l'amont depuis le flanc amont 34 du disque 24 de la turbine haute-pression. Le disque 28 porte des léchettes 36 de joints à labyrinthe et est relié au rotor du compresseur haute-pression.

Le disque 24 de la turbine haute-pression est également relié à un tourillon 38, disposé en aval de ce disque 24, par une bride annulaire 40 s'étendant radialement à l'extrémité aval d'une paroi cylindrique 42 qui s'étend vers l'aval depuis le flanc aval 44 du disque 24 de la turbine haute-pression. Le tourillon 38 porte également des léchettes 46 de joints à labyrinthe.

En fonctionnement, les aubes 26 du disque 24 de la turbine haute-pression et l'anneau d'étanchéité entourant ces aubes sont soumis à d'importantes contraintes thermiques du fait du passage des gaz de combustion très chauds dans la turbine.

Pour limiter l'impact négatif de ces contraintes thermiques sur la durée de vie des aubes 26, ces dernières comportent des circuits internes de conduits parcourus par de l'air de ventilation prélevé en fond de chambre de combustion, et dont la température est inférieure à celle des gaz de combustion.

Cet air, symbolisé par la flèche 48, est amené dans une cavité annulaire 50 par des injecteurs 52 répartis annulairement autour de l'axe du turboréacteur et montés à l'extrémité amont de conduites coudées 54 raccordées à un espace annulaire 56 de contournement de la chambre de combustion, délimité par une paroi tronconique radialement interne 58 de cette chambre. L'air de ventilation 48 sortant des injecteurs entre dans la cavité 50 par des orifices 62 formés dans le disque 28.

La cavité 50 est délimitée par le disque 28, la paroi cylindrique 32 portant la bride amont 30, et par le flanc amont 34 du disque 24, et cette cavité 50 communique avec les circuits de ventilation aménagés à l'intérieur des aubes 26 et débouchant dans cette cavité au niveau des pieds des aubes. L'air de ventilation 48 s'écoule dans la cavité 50 radialement vers l'extérieur le long du flanc amont 34 du disque jusqu'aux orifices d'entrée des circuits de ventilation des aubes 26.

En fonctionnement, la température élevée des gaz de combustion provoque des dilatations thermiques des aubes 26 et de l'anneau d'étanchéité qui les entoure, mais aussi du disque 24 portant ces aubes.

Cette température varie en fonction du régime de fonctionnement du turboréacteur, de sorte que les éléments précités vont tour à tour se dilater, lors de montées en régime, et se contracter, lors de baisses de régime.

Le moyeu 64 du disque est ventilé par de l'air 66 prélevé au niveau du compresseur haute-pression du turboréacteur, par exemple entre les disques de rotor 12 et 14, et est guidé vers l'aval le long d'une enveloppe cylindrique ou fourreau 68 dont l'extrémité amont est reliée au disque 12 du compresseur haute-pression et dont l'extrémité aval est reliée par une bride 70 au tourillon 38. L'air 66 passe dans l'alésage du disque 24 et autour de son moyeu 64, en s'écoulant dans une cavité annulaire radialement interne 72 délimitée notamment par le fourreau 68 et par les parois cylindriques amont 32 et aval 42 du disque 24, et cet air de ventilation 66 s'échappe ensuite vers l'aval par des orifices formés dans la bride 70 du fourreau et dans le tourillon 38.

L'air de ventilation 66 permet de maintenir le disque 24 à un niveau de température destiné à limiter le gradient thermique au sein de ce disque.

En outre, lors d'une montée du régime de fonctionnement du turboréacteur, la température de l'air 66 augmente, ce qui permet de réchauffer le disque 24 et ainsi d'accélérer sa dilatation thermique et de limiter l'accroissement du jeu au sommet des aubes 26 de la turbine haute-pression, malgré la dilatation plus rapide de l'anneau d'étanchéité entourant ces aubes.

Lors d'une baisse de régime, la température de l'air 66 diminue de sorte que cet air refroidit le disque et accélère sa contraction thermique, ce qui permet de réduire les risques de frottement entre les sommets des aubes 26 et l'anneau d'étanchéité qui se contracte plus rapidement.

Toutefois, la température de l'air 66 prélevé sur le compresseur haute-pression est différente de celle de l'air 48 prélevé en fond de chambre de combustion et elle réagit aux évolutions du régime de fonctionnement du turboréacteur avec un retard sensible, ce qui limite l'efficacité de ce mode de ventilation du moyeu du disque 24.

De plus, l'air de ventilation 48 prélevé en fond de chambre de combustion a une pression supérieure à celle de l'air de ventilation 66 prélevé sur le compresseur haute-pression, et applique cette pression sur une partie radialement externe du flanc amont 34 du disque 24, tandis que la pression plus faible de l'air de ventilation 66 est appliquée de part et d'autre du moyeu 64 du disque. II en résulte un effort axial orienté vers l'aval sur le disque 24, rendant plus difficile le contrôle du turboréacteur.

L'invention propose, pour résoudre ces problèmes, de modifier les moyens de ventilation du disque 24 de la turbine haute-pression, et plus précisément d'utiliser une partie de l'air de ventilation 48 prélevé en fond de chambre de combustion pour la ventilation du moyeu 64 du disque 24.

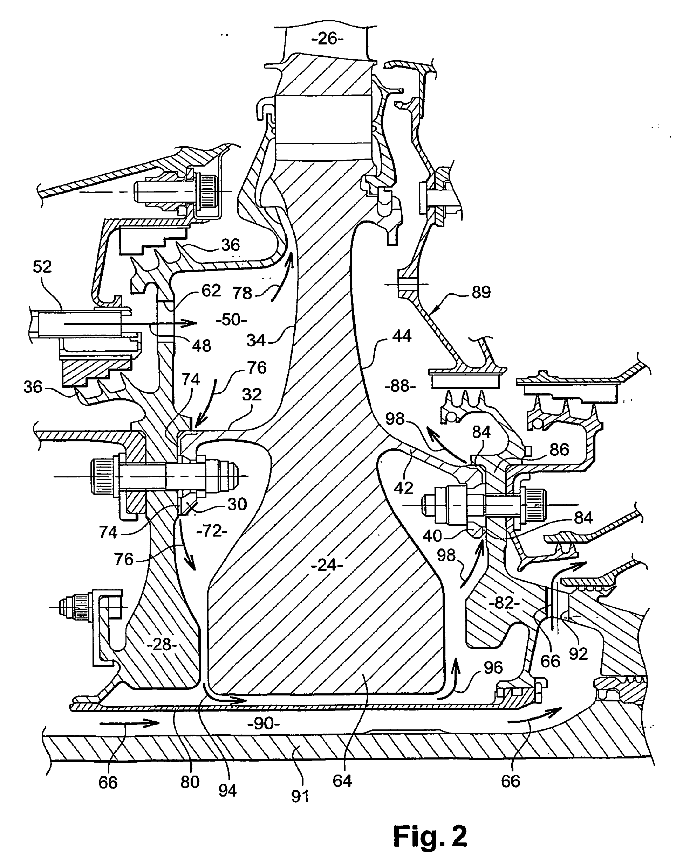

La figure 2 représente une partie d'un turboréacteur 10 conforme à l'invention, et plus particulièrement le disque 24 de la turbine haute-pression de ce turboréacteur ainsi que son environnement immédiat.

Selon l'invention, la bride amont 30 du disque 24 comporte des rainures radiales 74 formées sur sa face amont appliquée contre le flanc aval du disque 28, de manière à former des canaux de mise en communication de la cavité annulaire 50 située radialement à l'extérieur de la paroi cylindrique amont 32, avec la cavité annulaire 72 située radialement à l'intérieur de cette paroi 32.

Les rainures 74, parfois appelée lunules, permettent à une partie 76 de l'air de ventilation 48 de s'introduire dans la cavité radialement interne 72 dans laquelle s'étend le moyeu 64 du disque 24 pour ventiler ce moyeu, tandis que le reste 78 de l'air de ventilation 48 continue d'alimenter les circuits internes des aubes 26.

La cavité radialement interne 72 est délimitée par un fourreau cylindrique 80 dont l'extrémité amont est fixé au disque 28 et dont l'extrémité aval est fixée au tourillon 82 monté en aval du disque 24 de la turbine. Ce fourreau présente ainsi l'avantage d'une étendue axiale considérablement réduite par rapport à celle du fourreau 68 de l'art antérieur décrit ci-dessus.

Par ailleurs, des rainures 84 analogues aux rainures 74 sont formées sur la face aval de la bride aval 40 appliquée contre une paroi radiale amont 86 du tourillon 82, pour former des canaux de mise en communication de la cavité radialement interne 72 avec une cavité annulaire aval 88 située radialement à l'extérieur de la paroi cylindrique 42 portant la bride aval 40 et délimitée par le flanc aval 44 du disque 24 et par des éléments de stator 89.

De l'air de ventilation 66 continue d'être prélevé au niveau du compresseur haute-pression, comme dans l'art antérieur décrit ci-dessus, mais cet air ne passe plus dans la cavité radialement interne 72 et est guidé dans un passage annulaire 90 délimité par le fourreau 80 et un arbre 91 du rotor d'une turbine basse-pression agencée en aval de la turbine haute-pression. Cet air 66 s'écoule vers l'aval en passant par des orifices 92 du tourillon 82 pour aller ventiler des éléments de la turbine basse-pression, tels que des disques de rotor. Ainsi, contrairement au tourillon 38 de l'art antérieur, le tourillon 82 ne comporte pas d'orifices débouchant dans la cavité radialement interne 72.

En fonctionnement, une partie 78 de l'air de ventilation 48 prélevé en fond de chambre de combustion assure la ventilation des aubes 26 tandis qu'une autre partie 76 de cet air passe par les canaux formés par les rainures 74 de la bride amont 30 jusque dans la cavité radialement interne 72. L'air 76 assure ainsi la ventilation du disque 24 de la turbine haute-pression, et en particulier de son moyeu 64, en s'écoulant d'amont en aval dans la cavité 72 de manière à contourner le moyeu 64, comme symbolisé par les flèches 94 et 96. L'air de ventilation du disque 24 passe ensuite par les canaux formés par les rainures 84 de la bride aval 40 jusque dans la cavité radialement externe aval 88, comme symbolisé par les flèches 98, et assure la ventilation du flanc aval 44 du disque 24.

L'air 76 de ventilation du disque 24 est ainsi à la même température que l'air 78 de ventilation des aubes 26. Cette température est inférieure à celle des gaz de combustion éjectés par la chambre de combustion de sorte que l'air 78 assure en permanence le refroidissement des aubes, et cette température varie en fonction du régime de fonctionnement du turboréacteur de sorte que l'air 76 réchauffe le disque 24 lors d'une montée en régime et refroidisse ce disque 24 lors d'une baisse du régime.

La température de l'air de ventilation 76 prélevé en fond de chambre de combustion réagit plus rapidement aux variations de régime du turboréacteur que celle de l'air de ventilation 66 prélevé sur le compresseur haute-pression.

II en résulte une meilleure synchronisation des dilatations thermiques de l'anneau d'étanchéité du stator de la turbine haute-pression et de celles du rotor de cette turbine, ce qui permet un meilleur contrôle du jeu au sommet des aubes 26 portées par le disque 24.

II en résulte également une meilleure homogénéité de la température dans le disque 24, de nature à améliorer la durée de vie de ce disque, et rendant possible, lors du dimensionnement de la turbine haute-pression, l'utilisation d'un disque d'épaisseur plus faible que dans l'art antérieur, permettant un gain de masse et améliorant encore le temps de réponse en température de ce disque.

Par ailleurs, du fait de la circulation de l'air 76 dans les trois cavités annulaires, respectivement radialement externes 50 et 88 et radialement interne 72, la même pression est appliquée sur les flancs amont 34 et aval 44 du disque 24 de sorte que la poussée axiale exercée sur le disque par l'air de ventilation est sensiblement nulle, ce qui facilite le contrôle du turboréacteur.

Enfin, le raccourcissement du fourreau 80 par rapport au fourreau 68 de l'art antérieur permet un gain de masse et réduit les risques de coïncidences vibratoires sur les modes de flexion de ce fourreau.

Dans l'exemple représenté sur la figure 2 et décrit ci-dessus, les moyens de mise en communication des cavités radialement externes 50 et 88 et radialement interne 72 sont des canaux formés par des rainures radiales formées sur les brides 30 et 40. De telles rainures permettent la mise en communication des cavités précitées tout en préservant la rigidité des parois cylindriques 32 et 42 portant les brides 30 et 40.

En variante ou de manière complémentaire, il serait possible de prévoir des orifices dans ces parois cylindriques 32 et 42 pour le passage de l'air de ventilation dans les différentes cavités.

## Revendications

1. Turbine haute-pression de turbomachine, comprenant au moins un disque aubagé de rotor (24) comportant des brides annulaires amont (30, 32) et aval (40, 42) séparant une cavité annulaire radialement interne (72) dans laquelle s'étend le moyeu (64) du disque (24), de deux cavités annulaires radialement externes, dont l'une (50) est en amont du disque et reçoit un flux d'air (48) de ventilation des aubes du disque provenant d'un fond de chambre de combustion, et dont l'autre (88) est en aval du disque, **caractérisée en ce que** la bride amont (30, 32) du disque comporte des moyens (74) faisant communiquer la cavité radialement externe amont (50) et la cavité radialement interne (72) pour la ventilation du moyeu (64) du disque (24).

2. Turbine haute-pression selon la revendication 1, **caractérisée en ce que** les moyens faisant communiquer la cavité radialement externe amont (50) et la cavité radialement interne (72) comprennent des rainures radiales (74) formées sur la face amont de la bride amont (30) du disque, ces rainures (74) formant des canaux de circulation d'air entre la bride amont (30) et un composant tournant (28) de la turbomachine auquel cette bride est reliée.

3. Turbine haute-pression selon la revendication 1 ou 2, **caractérisée en ce que** la bride aval (40) du disque comprend des moyens (84) faisant communiquer la cavité radialement interne (72) et la cavité radialement externe aval (88).

4. Turbine haute-pression selon la revendication 3, **caractérisée en ce que** les moyens faisant communiquer la cavité radialement externe aval (88) et la cavité radialement interne (72) comprennent des rainures radiales (84) formées sur la face aval de la bride aval (40) du disque, ces rainures (84) formant des canaux de circulation d'air entre la bride aval (30) et un composant tournant (82) de la turbomachine auquel cette bride est reliée.

5. Turbine haute-pression selon l'une des revendications précédentes, **caractérisée en ce.que** la cavité radialement interne (72) est délimitée, radialement vers l'intérieur, par une enveloppe cylindrique ou fourreau (80) dont l'extrémité amont est fixée au composant (28) portant la bride amont (30) du disque (24), et dont l'extrémité aval est fixée au composant (82) portant la bride aval (40) du disque.

6. Turbine haute-pression selon la revendication 5, **caractérisée en ce que** le fourreau (80) délimite, avec l'arbre (91) d'une turbine basse pression de la turbomachine, un passage annulaire (90) d'amenée d'air de ventilation (66) prélevé sur un étage d'un compresseur haute-pression de la turbomachine.

7. Turbine haute-pression selon l'une des revendications précédentes, **caractérisée en ce que** le composant portant la bride amont (30) du disque (24) est un disque de rotor (28) portant des joints à labyrinthe (36) et comportant des orifices (62) pour le passage du flux d'air (48) prélevé en fond de chambre de combustion.

8. Turbine haute-pression selon la revendication 7, **caractérisée en ce que** les orifices (62) du disque (28) portant les joints à labyrinthe (36) sont ménagés dans le prolongement d'injecteurs (52) fixés à une paroi interne (58) de la chambre de combustion.

9. Turbine selon l'une des revendications précédentes, **caractérisée en ce que** le composant portant la bride aval (40) du disque est un tourillon (82) du rotor.

10. Turbomachine, **caractérisée en ce qu'**elle comprend une turbine haute-pression selon l'une des revendications précédentes.

## Claims

1. A high pressure turbine for a turbomachine, the turbine comprising at least one bladed rotor disk (24) having upstream and downstream annular flanges (30, 32; 40, 42) separating a radially inner annular cavity (72) containing the hub (64) of the disk (24) from two radially outer annular cavities, one of which cavities (50) is upstream from the disk and receives a stream of air (48) for ventilating the blades of the disk and coming from a combustion chamber end, and the other of which cavities (88) is downstream from the disk, the turbine being **characterized in that** the upstream flange (30, 32) of the disk includes means (74) putting the upstream radially outer cavity (50) into communication with the radially inner cavity (72) for ventilating the hub (64) of the disk (24).

2. A high pressure turbine according to claim 1, **characterized in that** the means putting the upstream radially outer cavity (50) into communication with the radially inner cavity (72) comprise radial grooves (74) formed in the upstream face of the upstream flange (30) of the disk, these grooves (74) forming air flow channels between the upstream flange (30) and a rotary component (28) of the turbomachine to which said flange is connected.

3. A high pressure turbine according to claim 1 or claim 2, **characterized in that** the downstream flange (40) of the disk includes means (84) putting the radially inner cavity (72) into communication with the downstream radially outer cavity (88).

4. A high pressure turbine according to claim 3, **characterized in that** the means putting the downstream radially outer cavity (88) into communication with the radially inner cavity (72) comprise radial grooves (84) formed in the downstream face of the downstream flange (40) of the disk, these grooves (84) forming air flow channels between the downstream flange (40) and a rotary component (82) of the turbomachine to which the flange is connected.

5. A high pressure turbine according to any preceding claim, **characterized in that** the radially inner cavity (72) is defined radially inwards by a cylindrical shroud or sheath (80) having its upstream end fastened to the component (28) carrying the upstream flange (30) of the disk (24), and having its downstream end fastened to the component (82) carrying the downstream flange (40) of the disk.

6. A high pressure turbine according to claim 5, **characterized in that** the sheath (80) co-operates with the shaft (91) of a low pressure turbine of the turbomachine to define an annular passage (90) for delivering ventilation air (66) bled from a stage of a high pressure compressor of the turbomachine.

7. A high pressure turbine according to any preceding claim, **characterized in that** the component carrying the upstream flange (30) of the disk (24) is a rotor disk (28) carrying labyrinth seals (36) and including orifices (62) for passing the stream of air (48) bled from the combustion chamber end.

8. A high pressure turbine according to claim 7, **characterized in that** the orifices (62) of the disk (28) carrying the labyrinth seals (36) are formed in line with injectors (52) fastened to an inside wall (58) of the combustion chamber.

9. A turbine according to any preceding claim, **characterized in that** the component carrying the downstream flange (40) of the disk is a drive cone (82) of the rotor.

10. A turbomachine, **characterized in that** it includes a high pressure turbine according to any preceding claim.

## Patentansprüche

1. Hockdruckturbine einer Turbomaschine, enthaltend zumindest eine Rotorschaufelscheibe (24), die stromaufwärtige Ringflansche (30, 32) und stromabwärtige Ringflansch (40, 42) aufweist, welche einen radial inneren ringförmigen Hohlraum (72), in welchem die Nabe (64) der Scheibe (24) verläuft, von zwei radial äußeren ringförmigen Hohlräumen trennen, von denen der eine (50) der Scheibe vorgelagert ist und einen Luftstrom (48) zur Belüftung der Schaufeln der Scheibe aufnimmt, der von einem Brennkammerboden stammt, und von denen der andere (88) der Scheibe nachgelagert ist, **dadurch gekennzeichnet, dass** der stromaufwärtige Flansch (30, 32) der Scheibe Mittel (74) aufweist, über welche der radial äußere, stromaufwärtige Hohlraum (50) und der radial innere Hohlraum (72) zur Belüftung der Nabe (64) der Scheibe (24) miteinander kommunizieren.

2. Hochdruckturbine nach Anspruch 1, **dadurch gekennzeichnet, dass** die Mittel, über welche der radial äußere, stromaufwärtige Hohlraum (50) mit dem radial inneren Hohlraum (72) kommuniziert, radial verlaufende Nuten (74) aufweisen, die an der stromaufwärtigen Seite des stromaufwärtigen Flansches (30) der Scheibe ausgebildet sind, wobei diese Nuten (74) Luftströmungskanäle zwischen dem stromaufwärtigen Flansch (30) und einem umlaufenden Bauteil (28) der Turbomaschine bilden, mit dem dieser Flansch verbunden ist.

3. Hochdruckturbine nach Anspruch 1 oder 2, **dadurch gekennzeichnet, dass** der stromabwärtige Flansch (40) der Scheibe Mittel (84) aufweist, über welche der radial innere Hohlraum (72) mit dem stromabwärtigen, radial äußeren Hohlraum (88) kommuniziert.

4. Hochdruckturbine nach Anspruch 3, **dadurch gekennzeichnet, dass** die Mittel, über welche der stromabwärtige, radial äußere Hohlraum (88) mit dem radial inneren Hohlraum (72) kommuniziert, radial verlaufende Nuten (84) aufweisen, die an der stromabwärtigen Seite des stromabwärtigen Flansches (40) der Scheibe ausgebildet sind, wobei diese Nuten (84) Luftströmungskanäle zwischen dem stromabwärtigen Flansch (30) und einem umlaufenden Bauteil (82) der Turbomaschine bilden, mit dem dieser Flansch verbunden ist.

5. Hochdruckturbine nach einem der vorangehenden Ansprüche, **dadurch gekennzeichnet, dass** der radial innere Hohlraum (72) nach radial innen von einer zylindrischen Hülle bzw. Ummantelung (80) eingegrenzt wird, deren stromaufwärtiges Ende an das Bauteil (28) befestigt ist, das den stromaufwärtigen Flansch (30) der Scheibe (24) trägt, und deren stromabwärtiges Ende an das Bauteil (82) befestigt ist, das den stromabwärtigen Flansch (40) der Scheibe trägt.

6. Hochdruckturbine nach Anspruch 5, **dadurch gekennzeichnet, dass** die Ummantelung (80) mit der Welle (91) einer Niederdruckturbine der Turbomaschine einen ringförmigen Durchgang (90) zur Zufuhr von Ventilationsluft (66) eingrenzt, die an einer Stufe eines Hochdruckverdichters der Turbomaschine entnommen wird.

7. Hochdruckturbine nach einem der vorangehenden Ansprüche, **dadurch gekennzeichnet, dass** das Bauteil, welches den stromaufwärtigen Flansch (30) der Scheibe (24) trägt, eine Rotorscheibe (28) ist, die Labyrinthdichtungen (36) trägt und Öffnungen (62) für den Durchtritt der Luftströmung (48) aufweist, die am Boden der Brennkammer entnommen wird.

8. Hochdruckturbine nach Anspruch 7, **dadurch gekennzeichnet, dass** die Öffnungen (62) der die Labyrinthdichtungen (36) tragenden Scheibe (28) in der Verlängerung von Injektoren (52) ausgeführt sind, die an eine Innenwand (58) der Brennkammer befestigt sind.

9. Turbine nach einem der vorangehenden Ansprüche, **dadurch gekennzeichnet, dass** das den stromabwärtigen Flansch (40) der Scheibe tragende Bauteil ein Zapfen (82) des Rotors ist.

10. Turbomaschine, **dadurch gekennzeichnet, dass** sie eine Hochdruckturbine nach einem der vorangehenden Ansprüche aufweist.
